# EUROPEAN PATENT SPECIFICATION

(11) **EP 2 089 572 B1**
(45) Date of publication and mention of the grant of the patent: **23.10.2013**
(21) Application number: 07835423.0
(22) Date of filing: 13.11.2007
(51) Int. Cl.: D21C 9/06, B01D 33/067, B30B 9/20, D21C 9/18

(54) **A PRESS ROLL FOR WASHING AND/OR DEWATERING PULP, AND A METHOD FOR MANUFACTURING OR REPAIRING SUCH A PRESS ROLL**
PRESSROLLE ZUM WASCHEN UND/ODER ENTWÄSSERN VON PULPE UND VERFAHREN ZUR HERSTELLUNG ODER REPARATUR EINER DERARTIGEN PRESSROLLE
ROULEAU DE PRESSE POUR LAVAGE ET/OU ÉGOUTTAGE DE PULPE, ET PROCÉDÉ DE FABRICATION OU RÉPARATION DE CE ROULEAU DE PRESSE

(30) Priority: 23.11.2006 SE 0602515
(43) Date of publication of application: 19.08.2009
(73) Proprietor: Metso Paper, Inc., 00101 Helsinki (FI)
(72) Inventor: MOSSBERG, Jan, 871 30 Härnösand (SE)
(74) Representative: Löfgren, Håkan Bengt Alpo
(86) International application number: PCT/SE2007/050840
(87) International publication number: WO 2008/063122

(56) References cited:
- WO-A1-2005/047595
- WO-A1-2006/068569
- WO-A1-2007/004968
- GB-A- 291 148
- US-A- 1 685 084
- US-A1- 2005 230 306
- US-A1- 2005 236 339

## Description

### Technical Field

The present invention relates to a press roll for washing and/or dewatering pulp, comprising an axial core and a mantle section provided around the axial core, to which mantle section at least one perforated roll plate is attached, which roll plate has two short sides and two long sides, and the roll plate extends around the entire circumference of the press roll, and to a method for manufacturing or repairing a press roll for washing and/or dewatering pulp, the press roll comprising an axial core and a mantle section provided around the axial core, to which mantle section at least one perforated roll plate is intended to be attached. Further, the present invention relates to a roll press comprising the above-mentioned kind of press roll.

### Background of the Invention

When producing cellulose-based products, a roll press is frequently present for washing and dewatering the cellulose-based pulp. The pulp is passed between two cooperating press rolls in the roll press. The press rolls have a perforated outer surface, whereby the outer surface is permeable to liquid pressed out of the pulp. The pulp is pressed in the roll nip or press nip between the press rolls, whereby liquid is pressed out of the pulp. One example of such a roll press for dewatering pulp is disclosed in WO 97/21868, e.g., where the central axes of the press rolls lie in substantially the same horizontal plane, and the pulp passes the press nip between the press rolls in a vertical direction, from below upwards.

WO 03/018907 describes a sealing of a press roll in a roll press having two cooperating press rolls for dewatering material suspensions.

The above-mentioned press rolls have in common that their roll bodies have a conventional structure, where the roll body comprises an axial core, such as a central drum, which can comprise a drum or an inner drum covered with a covering plate, or the like. The central drum is provided with several supporting ribs arranged longitudinally along the longitudinal extension of the central drum and evenly distributed around the circumference of the central drum. The purpose of these supporting ribs is to strengthen the structure, and also to provide channels which axially guide liquid pressed out of the pulp to the ends of the press roll. A mantle section is attached onto these supporting ribs, which mantle section comprises several circumferential frame rings arranged along the entire length of the roll body. The purpose of the frame rings is to be a supporting structure for the perforated roll plates which are positioned utmost on the press roll, which roll plates are shrunk onto and abut the frame rings around their entire circumference, and also to allow expressed liquid, which has passed through the roll plate, to fall downwards after the passage through the apertures of the roll plate. Hereby, the rewetting is reduced, i.e. the liquid which after the press nip flows back through the roll plate and dilutes the pressed pulp, especially for roll presses where the pulp is passed through the press nip between two press rolls in a vertical direction from below upwards, such as in WO 97/21868.

In a conventional manner, the roll plates are shrunk onto and around the mantle section. In a heated condition, the roll plates are placed around the mantle section, and subsequently, the heated roll plates are cooled down, whereby the roll plate contracts and obtains a tight abutment against the mantle section along the entire circumference. When manufacturing and repairing press rolls in a conventional manner, the short sides of the roll plate, which form a transverse joint, have been joined by welding so that a tube structure is formed, which tube structure in a heated condition is slipped onto the mantle section via one of its ends. Alternatively, upon repair of a press roll, when a roll plate shall be exchanged, the short sides can be welded together after the roll plate has been placed onto the mantle section, after which the contraction of the roll plate is effected. After this, the long sides of the roll plate are welded, inter alia in order to lock the roll plate to the mantle section, i.e. to prevent the movement of the roll plate in relation to the mantle section in the circumferential direction of the press roll. The welding seams are machined so that the roll plates together form an even outer surface.

US 2005/0236339 A1 discloses a rotary drum filter having corrugated sheets mounted around the entire circumference of the drum filter, whereby alternating ridges and channels are formed along the longitudinal extension of the drum filter, where the ridges and channels extend along the direction of rotation of the drum filter. The drum filter comprises perforated plates which are attached to the outside of the corrugated sheets by welding the perforated plates to the tops of the ridges of the corrugated sheets. Liquid which has entered via the perforated plates is drained away via the channels formed by the corrugated sheets.

However, there are problems associated with the welding of the roll plates, especially with regard to the welding of the longitudinal sides of the roll plates, i.e. along the circumference of the press roll. The welding seam along the longitudinal side of a roll plate is subjected to stress during operation, inter alia because of something which appears as wave motions in the roll plate, so called shearing stress, which originate from the press nip between the two press rolls of a roll press, as the one disclosed in WO 97/21868, where the pulp is pressed together in the 8 mm press nip. As a results of this stress, the welding seam along the longitudinal side of the roll plate can sometimes crack after a certain time of operation, and this crack, or these cracks, can subsequently continue in the roll plate in an uncontrolled manner, which results in that the press roll must be replaced or repaired, which in turn results in costly stoppage. In the "welding crosses", where the welding seam of the transverse joint meets the welding seams which extend around the circumference, the risk of cracks is especially high.

US 2005/0230306 A1 discloses a way to mount perforated deck segments to the frame rings of the mantle section of a press roll without welding, which deck segments have a leading edge and a trailing edge. The frame rings comprise several longitudinally extending spaced apart grooves which open outwardly. The leading edge of the deck segment is provided with a bar which is adapted to engage in said groove. The same leading edge is provided with a lip adapted to clamp the trailing edge of a deck segment between the mantle section and said leading edge lip. The leading edge of the deck segment is provided a mounting opening and the bar is provided with an associated mounting opening, and the frame ring is provided with a hole. An attachment pin is inserted into the mounting openings of the deck segment and the bar, and into the associated frame ring hole, and attaches the bar to the mantle section

### The Object of the Invention

The objects of the present invention are thus to provide a press roll which is more durable and more reliable in operation compared to prior art press rolls, and avoids above-mentioned cracks in the roll plate.

### Summary of the Invention

The above-mentioned objects are achieved by providing a press roll of the kind mentioned in the introductory part of the description, having the features defined in the characterizing portion of claim 1, and by providing a method of the kind mentioned in the introductory part of the description, having the features defined in the characterizing portion of claim 7.

By the present invention, a press roll is obtained where the risk of cracks in the roll plate is radically reduced, because of the replacement of the welding seams along the long sides of the roll plate by the innovative mounting openings and attachment pins, which provide a locking of the roll plate to the mantle section, i.e. movement of the roll plate in relation to the mantle section in the circumferential direction of the press roll is prevented, without any welding of the long sides of the roll plate. Hereby, stoppage as a result of broken roll plates, which must be replaced, is prevented. By the present invention it is also easier to change worn or damaged roll plates, as the roll plate to be replaced does not need to be released from any welding seams at its long sides. The manufacturing of the press roll is also facilitated, because the subsequent grinding of the weld reinforcement, as a result of the welding of the long sides of the roll plate, is not needed. The present invention is especially advantageous for press rolls where the roll plate extends around the entire circumference of the press roll.

According to an advantageous embodiment of the present invention, the roll plate is provided with at least three mounting openings, into which fixing pins are received. For larger press rolls, it is advantageous with six mounting openings into which fixing pins are received, but other numbers of mounting openings are possible. Advantageously, the mounting openings are evenly distributed around the entire circumference of the press roll so that the distance between two mounting openings, which are adjacent to each other in the circumferential direction of the press roll, is substantially equal around the entire circumference of the press roll. In the case of three mounting openings, two mounting openings, which are adjacent to each other in the circumferential direction of the press roll, are spaced apart by about 120° in the cross section of the roll press, and in the case of six mounting openings, two mounting openings, which are adjacent to each other in the circumferential direction of the press roll, are spaced apart by about 60° in the cross section of the roll press. The fact that the distances between the mounting openings are equal facilitates the drilling of the holes.

According to a further advantageous embodiment of the present invention, the mounting openings are centrally positioned between the long sides of the roll plate, and advantageously along the longitudinal centre line of the roll plate. Hereby, symmetry in the structure is provided, which is advantageous. Alterna-tively, three mounting openings can for example be provided along the first long side of the roll plate and three additional mounting openings can be provided along the second long side of the roll plate, opposite the mounting openings at the first long side, whereby the desired symmetry in the structure is also obtained.

According to other advantageous embodiments of the present invention, each fixing pin is provided with a fixing portion, an attachment hole for each mounting opening is provided in the mantle section, and the fixing portion is anchored in this attachment hole. Advantageously, the fixing portion of the fixing pin is provided with at least one thread, and the fixing pin is driven into the attachment hole via the associated mounting opening. Hereby, a firm engagement between the fixing pin and the attachment hole is obtained. Alternatively, the attachment hole can be provided with at least one internal thread, and the fixing pin can be screwed into the attachment hole and engage the internal thread of the attachment hole. The mounting opening can also be provided with at least one internal thread adapted to engage the at least one thread of the fixing pin. For example, a ragged fixing portion can be an alternative to a thread fixing portion, whereby the fixing pin is driven into the attachment hole. Instead of anchoring the fixing pin in this attachment hole, the fixing pin can be anchored in an attachment member included in the mantle section, provided inside the mantle section, for example by way of threaded engagement, whereby the attachment hole is a through-hole.

Further advantageous embodiments of the press roll according to the present invention and further advantageous embodiments of the method according to the present invention emerge from the dependent claims.

The above-mentioned objects are also attained by providing a roll press having the features which are mentioned in claim 6.

### Brief Description of the Drawings

The present invention will now be described, for exemplary purposes, in more detail by way of embodiments and with reference to the enclosed drawings, in which:
- Fig. 1: is a schematic front view of one half of an embodiment of the press roll according to the present invention,
- Fig. 2: is a cross-section of the press of Fig. 1 along the line G-G,
- Fig. 3: is a schematic section of an embodiment of the fixing pin according to the present invention,
- Fig. 4: is a flow chart which schematically illustrates an embodiment of the method according to the present invention, and
- Fig. 5: is a schematic partially cut-away side view of an embodiment of the roll press according to the present invention.

### Detailed Description of Embodiments

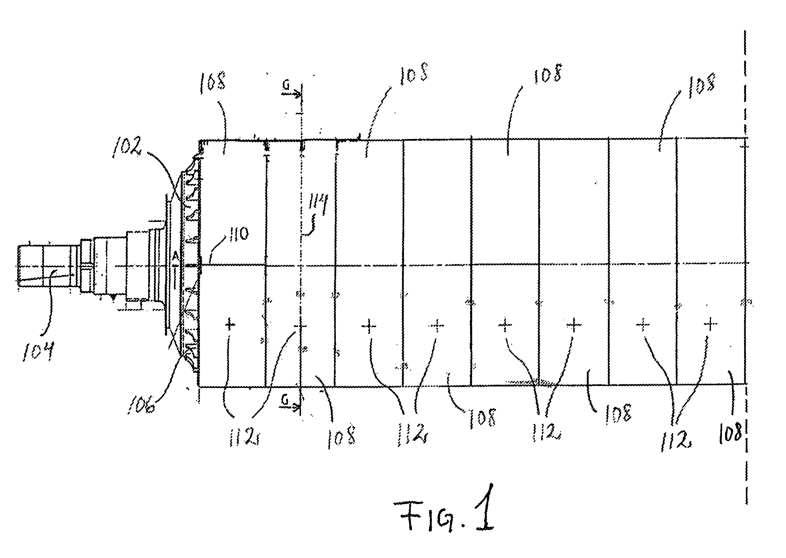

Fig. 1 shows only one half of a press roll according to the present invention, where the other half is a mirror image of the shown half. The press roll comprises an axial core 102 in the form of a central drum 102, to the outer ends of which attachment means 104 are attached for pivotally mounting the press roll in a roll press. Several supporting ribs 106, which extend along the longitudinal extension of the axial core 102 and extend in a substantially radial direction, are welded to the outer surface of the central drum 102. The supporting ribs 106 are distributed around the circumference of the central drum 102. The mantle section is shrunk onto these supporting ribs 106 in a conventional manner. Sixteen perforated roll plates 108 are attached to the mantle section, of which only eight are shown in the figure, and each roll plate 108 extends around the entire circumference of the press roll. The short sides of each roll plate 108, which meet in a transverse joint 110, have been welded to each other, after which the roll plate 108 has been slipped onto the mantle section and shrunk into position by cooling, so that it abuts against the mantle section. In this embodiment, each roll plate 108 comprises three mounting openings 112, where the position of only one mounting opening 112 per roll plate 108 is shown in the figure. The mounting openings 112 are distributed between the two short sides of the roll plate 108 along the longitudinal extension of the roll plate 108 and the circumference of the press roll. As shown in the figure, the mounting openings 112 are located along the longitudinal centre line 114 of the roll plate 108.

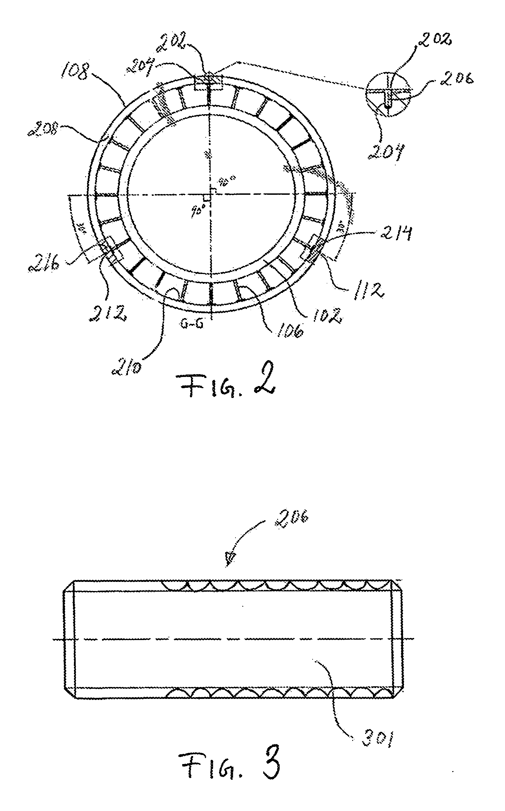

Fig. 2 shows a section of the press roll of Fig. 1 along G-G, and an enlarged view of a mounting opening 202 with an associated attachment hole 204 and fixing pin 206. Here, the mantel section of the press roll is more clearly shown. The mantle section comprises several frame rings 208 distributed along the length of the central drum 102 and several flat bars 210 which extend along the longitudinal extension of the central drum 102 and are distributed around the circumference of the press roll. The frame rings 208 are attached to the supporting ribs 106 via the flat bars 210. The roll plates 108 abut against the frame rings 208. The roll plate 108 comprises three drilled mounting openings 112, 202, 212, and the mantle section comprises three attachment holes 204, 214, 216 which are drilled in one frame ring 208. Each attachment hole 204, 214, 216 extends along the same radius along which each mounting opening 112, 202, 212 extends, whereby each attachment hole 204, 214, 216 is radially aligned with its mounting opening 112, 202, 212. A fixing pin 206 is received in each mounting opening 112, 202, 212 and attachment hole 204, 214, 216, which fixing pin 206 is anchored in the frame ring 208 and is surrounded by the inner surface of its mounting opening 112, 202, 212, whereby a locking of the roll plate 108 to the mantle section is obtained. Each mounting opening 112, 202, 212 and its attachment hole 204, 214, 216 are radially aligned with a supporting rib 106, which provides an effective rigidity when drilling the mounting openings 112, 202, 212 and attachment holes 204, 214, 216. The pairs of mounting openings 112, 202, 212 and the attachment holes 204, 214, 216 are evenly distributed around the entire circumference of the press roll so that the distance between two mounting openings 112, 202, 212, which are adjacent to each other in the circumferential direction of the press roll, is substantially equal around the entire circumference of the press roll. Here, two mounting openings 112, 202, 212, which are adjacent to each other in the circumferential direction of the press roll, are spaced apart by about 120° in the cross-section of the roll press. Here, each attachment hole has a smaller diameter than each mounting opening. The surfaces of the roll plate, where each mounting opening 112, 202, 212 is provided, have no perforation.

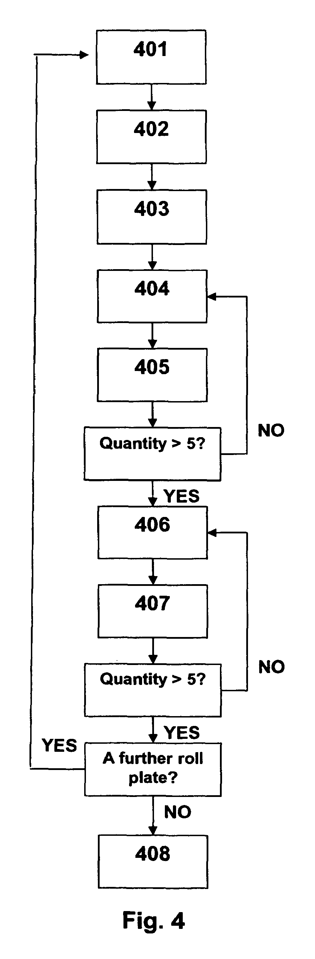

Fig. 3 shows a section of an embodiment of the fixing pin 206 according to the present invention, having a diameter which is a bit larger than the diameter of the attachment hole. The fixing pin 206 is made from the alloy 254Smo and is provided with a fixing portion 301 for anchorage in an attachment hole, the fixing portion 301 being provided with at least one thread. The threaded fixing portion 301 is driven into an attachment hole via the associated mounting opening as described in connection with fig. 4. The diameter of the fixing pin 206 is smaller than the diameter of the mounting opening, whereby a gap is provided between the fixing pin 206 and the inner surface of its mounting opening, and potential damage to the roll plate when driving the fixing pin 206 is avoided. Further advantages with this gap are disclosed in connection with Fig. 4.

Fig. 4 shows a flow chart illustrating an embodiment of the method when manufacturing a press roll for washing and/or dewatering pulp according to the present invention, where the press roll comprises an axial core and a mantle section provided around the axial core, to which mantle section several perforated roll plates are intended to be attached, which method comprises the following steps: A roll plate is heated to about 250-300°C, at 401, so it thermally expands and, inter alia, is lengthened, and is placed around the frame rings of the mantle section, at 402, so that the long sides of the roll plate extend along the entire circumference of the press roll. The heated roll plate, which surrounds the mantle section, is now "hanging down" on the underside of the press roll. The roll plate is cooled, at 403, whereby the roll plate, which is provided onto the mantle section, is shrunk into firm engagement with and around the frame rings of the mantle section, and a so called "shrink fit" is attained. In the same step, at 404, a first mounting opening is drilled in the roll plate, between the two short sides of the roll plate along the longitudinal centre line of the roll plate, and a first attachment hole is drilled in a frame ring of the mantle section. This drilling is performed by a drill having two different diameters, so that the attachment hole obtains a smaller diameter than the diameter of the mounting opening. The drilling is performed so that the mounting opening and the associated attachment hole are radially aligned with a supporting rib attached to the axial core of the press roll. Subsequently, the press roll is rotated about 60° in relation to the drill, at 405, and the drilling step is repeated, at 404, so that a second mounting opening is provided in the roll plate and as second attachment hole is provided in the frame ring of the mantle section. Said rotation, 405, and drilling, 404, are repeated until the number of mounting openings and attachment holes drilled, respectively, is six. Hereby, the mounting openings are evenly distributed around the entire circumference of the press roll so that the distance between two mounting openings, which are adjacent to each other in the circumferential direction of the press roll, is substantially equal around the entire circumference of the press roll.

A first fixing pin is provided with a fixing portion, at 406, comprising at least one thread, and the first fixing pin is driven into the first attachment hole, at 407, via the first mounting opening, whereby an effective anchoring of the fixing pin is attained. Subsequently, a second fixing pin is provided with a fixing portion, at 406, comprising at least one thread, and is driven into the second attachment hole, at 407, via the first mounting opening, in the same manner. This is repeated until the number of driven fixing pin is six, and all six pairs of mounting openings and attachment holes are provided with a fixing pin. Additionally, each fixing pin has been given such a longitudinal extension in relation to each attachment hole and mounting opening that the fixing pin is surrounded by the inner surface of the mounting opening without rising above the outer surface of the roll plate. Further, the diameter of every fixing pin is smaller than the diameter of its mounting opening, whereby a gap is provided between the fixing pin and the inner surface of its mounting surface. Said gap enables a visual inspection to see if the roll plate has been dislocated during the assembly and/or during operation. The gap also provides for a play which is advantageous since the roll plate expands and contracts. If a further roll plate is to be mounted, the steps 401 to 407 are repeated, and when all roll plates are mounted, the press roll can be mounted in a roll press, at 408. When repairing a press roll, because one of the roll plates is damaged, the damaged roll plate is removed, after which the steps 401 to 407 are performed as mentioned above.

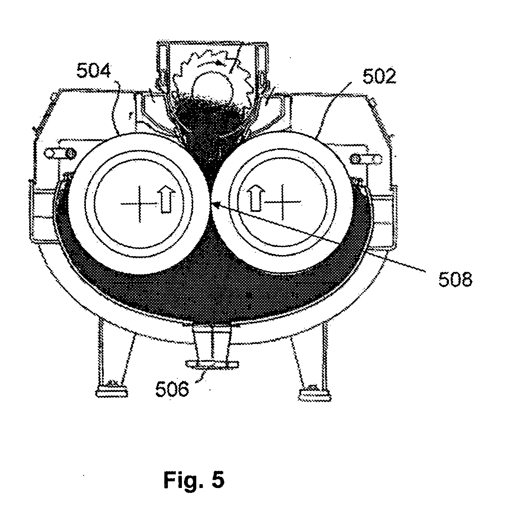

Fig. 5 shows an embodiment of the roll press for washing and/or dewatering pulp according to the present invention, comprising a first press roll 502 and a second roll press 504 of the kind shown in Fig. 1. The longitudinal central axes of the press rolls 502, 504 lie in substantially the same horizontal plane. The pulp is received via an inlet 506 and is pushed up towards the press nip 408 between the first and second press rolls 502, 504. The direction of rotation of each press roll 502, 504 is illustrated by way of vertical arrows in the figure. The pulp passes the press nip 508 in a vertical direction, from below upwards, where the pulp is dewatered and is pushed further up in a vertical direction. Other embodiments of the roll press according to the present invention are also possible. The longitudinal central axes of the press rolls can for example lie in substantially the same vertical plane, etc.

## Claims

1. A press roll for washing and/or dewatering pulp, comprising an axial core (102) and a mantle section provided around the axial core (102), to which mantle section at least one perforated roll plate (108) is attached, which roll plate (108) has two short sides and two long sides, and the roll plate (108) extends around the entire circumference of the press roll, **characterized in that** the perforated roll plate (108) comprises at least two mounting openings (112, 202, 212) which are distributed between the two short sides of the roll plate (108) along the longitudinal extension of the roll plate (108) and the entire circumference of the press roll, and **in that** the press roll comprises a fixing pin (206) for each mounting opening (112, 202, 212), which fixing pin (206) is anchored in the mantle section and surrounded by the inner surface of its mounting opening (112, 202, 212), whereby movement of the roll plate (108) in relation to the mantle section in the circumferential direction of the press roll is prevented.

2. A press roll according to claim 1, **characterized in that** the mounting openings (112, 202, 212) are evenly distributed around the entire circumference of the press roll so that the distance between two mounting openings (112, 202, 212), which are adjacent to each other in the circumferential direction of the press roll, is substantially equal around the entire circumference of the press roll.

3. A press roll according to claim 1 or 2, **characterized in that** an attachment hole (204, 214, 216) for each mounting opening (112, 202, 212) is provided in the mantle section for receiving the fixing pin (206), and **in that** each fixing pin (206) is provided with a fixing portion (301) anchored in this attachment hole (204, 214, 216).

4. A press roll according to claim 3, **characterized in that** the press roll comprises several supporting ribs (106) extending along the longitudinal extension of the axial core (102) and extending in a substantially radial direction, the supporting ribs (106) being distributed around the circumference of the axial core (102), and the mantle section is attached to the axial core (102) via the supporting ribs (106), and **in that** each mounting opening (112, 202, 212) and its attachment hole (204. 214, 216) are radially aligned with a supporting rib (106).

5. A press roll according to any of the claims 1 to 4, **characterized in that** a gap is provided between the fixing pin (206) and the inner surface of its mounting opening (112, 202, 212).

6. A roll press for washing and/or dewatering pulp, comprising two press rolls, between which the pulp is passed and pressed in the press nip between them, each press roll comprising an axial core (102) and a mantle section provided around the axial core (102), to which mantle section at least one perforated roll plate (108) is attached, **characterized in that** at least one of the press rolls comprises the features which are mentioned in any of the claims 1 to 5.

7. A method for manufacturing or repairing a press roll for washing and/or dewatering pulp, the press roll comprising an axial core (102) and a mantle section provided around the axial core (102), to which mantle section at least one perforated roll plate (108) is intended to be attached, which method comprises the following steps:
• attaching (402, 403) the at least one roll plate (108) to the mantle section so that its long sides extend around the entire circumference of the press roll;
• drilling (404) at least two mounting openings (112, 202, 212) in the roll plate (108), which are distributed between the two short sides of the roll plate (108) along the longitudinal extension of the roll plate (108) and the entire circumference of the press roll;
• inserting (407) a fixing pin (206) in each mounting opening (112, 202, 212);
and
• anchoring (407) each fixing pin (206) in the mantle section so that the fixing pin (206) is surrounded by the inner surface of its mounting opening (112, 202, 212), whereby movement of the roll plate (108) in relation to the mantle section in the circumferential direction of the press roll is prevented.

8. A method according to claim 7, **characterized in that** said attachment (402, 403) of the roll plate (108) to the mantle section comprises the contraction of the roll plate (108), which is provided around the mantle section, around the mantle section.

9. A method according to claim 7 or 8, **characterized in that** the mounting openings (112, 202, 212) are drilled (404) so that they are centrally positioned between the long sides of the roll plate (108).

10. A method according to claim 9, **characterized in that** the mounting openings (112, 202, 212) are drilled (404) so that they are positioned along the longitudinal centre line (114) of the roll plate (108).

11. A method according to any of the claims 7 to 10, **characterized in that** the mounting openings (112, 202, 212) are evenly distributed around the entire circumference of the press roll so that the distance between two mounting openings (112, 202, 212), which are adjacent to each other in the circumferential direction of the press roll, is substantially equal around the entire circumference of the press roll.

12. A method according to any of the claims 7 to 11, **characterized in that** the roll plate (108) is provided with at least three mounting openings (112, 202, 212), into which fixing pins (206) are inserted and thereafter anchored in the mantle section.

13. A method according to any of the claims 7 to 12, **characterized in that** each fixing pin (206) is provided (406) with a fixing portion (301), **in that** an attachment hole (204, 214, 216) for each mounting opening (112, 202, 212) is drilled (404) in the mantle section subsequent to the drilling of the associated mounting opening (112, 202, 212), and **in that** the fixing portion (301) is anchored (407) in this attachment hole (204, 214, 216).

14. A method according to claim 13, where the press roll comprises several supporting ribs (106) extending along the longitudinal extension of the axial core (102) and extending in a substantially radial direction, the supporting ribs (106) being distributed around the circumference of the axial core (102), and the mantle section is attached to the axial core (102) via the supporting ribs (106), **characterized in that** each mounting opening (112, 202, 212) and its attachment hole (204, 214, 216) are radially aligned with a supporting rib (106).

15. A method according to any of the claims 7 to 14, **characterized in that** each mounting opening (112, 202, 212) is drilled (404) so that a gap is provided between the fixing pin (206) and the inner surface of its mounting opening (112, 202, 212).

## Patentansprüche

1. Pressrolle zum Waschen und/oder Entwässern von Pülpe, umfassend einen axialen Kern (102) und einen Mantelabschnitt der um den axialen Kern (102) angeordnet ist, wobei am Mantelabschnitt zumindest eine perforierte Rollenplatte (108) befestigt ist, diese Rollenplatte (108) weist zwei kurze Seiten und zwei lange Seiten auf, und die Rollenplatte (108) erstreckt sich um den gesamten Umfang der Pressrolle, **dadurch gekennzeichnet, dass** die perforierte Rollenplatte (108) zumindest zwei Montageöffnungen (112, 202, 212) aufweist, die zwischen den zwei kurzen Seiten der Rollenplatte (108), entlang der Längserstreckung der Rollenplatte (108), und des gesamten Umfanges der Pressrolle, verteilt sind, und dadurch, dass die Pressrolle einen Befestigungszapfen (206) für jede Montageöffnung (112, 202, 212) aufweist, wobei der Befestigungszapfen (206) im Mantelabschnitt verankert ist und von der inneren Oberfläche seiner Montageöffnung (112, 202, 212) umgeben ist, wodurch die Bewegung der Rollenplatte (108) in Beziehung zum Mantelabschnitt in der Umfangsrichtung der Pressrolle verhindert ist.

2. Pressrolle nach Anspruch 1, **dadurch gekennzeichnet, dass** die Montageöffnungen (112, 202, 212) gleichmäßig um den gesamten Umfang der Pressrolle verteilt sind, sodass der Abstand zweier Montageöffnungen (112, 202, 212), die einander in Umfangsrichtung der Pressrolle benachbart sind, im Wesentlichen um den gesamten Umfang der Pressrolle herum gleich ist.

3. Pressrolle nach Anspruch 1 oder 2, **dadurch gekennzeichnet, dass** ein Befestigungsloch (204, 214, 216) für jede Montageöffnung (112, 202, 212) im Mantelabschnitt vorgesehen ist, um den Befestigungszapfen (206) aufzunehmen, und dadurch, dass jeder Befestigungszapfen (206) mit einem Befestigungsabschnitt (301) versehen ist, der in diesem Befestigungsloch (204, 214, 216) verankert ist.

4. Pressrolle nach Anspruch 3, **dadurch gekennzeichnet, dass** die Pressrolle verschiedene Stützrippen (106) umfasst, die sich in Längsrichtung des axialen Kernes (102) erstrecken und in einer im Wesentlichen radialen Richtung verlaufen, die Stützrippen (106) sind um den Umfang des axialen Kernes (102) verteilt und der Mantelabschnitt ist am axialem Kern (102) über die Stützrippen (106) befestigt, und dadurch, dass jede Montageöffnung (112, 202, 212) und ihr Befestigungsloch (204, 214, 216) in radialer Richtung fluchtend mit einer Stützrippe (106) angeordnet ist.

5. Pressrolle nach einem der Ansprüche 1 bis 4, **dadurch gekennzeichnet, dass** zwischen dem Befestigungszapfen (206) und der inneren Oberfläche seiner Montageöffnung (112, 202, 212) ein Spalt vorgesehen ist.

6. Rollenpresse zum Waschen und/oder Entwässern von Pülpe, umfassend zwei Pressrollen, zwischen die die Pülpe im durchgelangt und im Pressspalt zwischen ihnen gepresst wird, jede Pressrolle umfasst einen axialen Kern (102) und einen Mantelabschnitt, der um den axialen Kern (102) gesehen ist, wobei mit dem Mantelabschnitt zumindest eine perforierte Platte (108) verbunden ist, **dadurch gekennzeichnet, dass** zumindest eine der Pressrollen die in einem der Ansprüche 1 bis 5 genannten Merkmale aufweist.

7. Verfahren zur Herstellung oder Reparatur einer Pressrolle zum Waschen und/oder Entwässern von Pülpe, wobei die Pressrolle einen axialen Kern (102) und einen Mantelabschnitt um den axialen Kern (102) herum umfasst, an welchem Mantelabschnitt zumindest eine perforierte Rollenplatte (108) dazu vorgesehen ist, daran befestigt zu werden, das Verfahren umfasst die folgenden Schritte:
• Befestigen (402, 403) der zumindest einen Rollenplatte (108) am Mantelabschnitt, sodass ihre langen Seiten sich um den gesamten Umfang der Pressrolle erstrecken;
• Bohren (404) von zumindest zwei Montageöffnungen (112, 202, 212), in die Rollenplatte (108) die zwischen den beiden kurzen Seiten der Rollenplatte (108) entlang der Längserstreckung der Rollenplatte (108) liegen und um den gesamten Umfang der Pressrolle verteilt sind;
• Einbringen (407) eines Befestigungszapfens (206) in jede Montageöffnung (112, 202, 212) und
• Verankern (407) jedes Befestigungszapfens (206) im Mantelabschnitt, sodass der Befestigungszapfen (206) von der inneren Oberfläche seiner Montageöffnung (112, 202, 212) umgeben ist, wodurch die Bewegung der Rollenplatte (108) bezüglich des Mantelabschnittes in der Umfangsrichtung der Pressrolle verhindert wird.

8. Verfahren nach Anspruch 7, **dadurch gekennzeichnet, dass** die Befestigung (402, 403) der Rollenplatte (108) mit dem Mantelabschnitt das Biegen der Rollenplatte (108), die um den Mantelabschnitt vorgesehen ist, um den Mantelabschnitt einbegreift.

9. Verfahren nach Anspruch 7 oder 8, **dadurch gekennzeichnet, dass** die Montageöffnungen (112, 202, 212) so gebohrt (404) werden, dass sie zentral zwischen den Längsseiten der Rollenplatte (108) angeordnet sind.

10. Verfahren nach Anspruch 9, **dadurch gekennzeichnet, dass** die Montageöffnungen (112, 202, 212) so gebohrt werden (404), dass sie entlang der Längsmittellinie (114) der Rollenplatte (108) angeordnet sind.

11. Verfahren nach einem der Ansprüche 7 bis 10, **dadurch gekennzeichnet, dass** die Montageöffnungen (112, 202, 212) gleichmäßig entlang des gesamten Umfangs der Pressrolle verteilt sind, sodass der Abstand zwischen zwei benachbarten Montageöffnungen (112, 202, 212) in Umfangsrichtung der Pressrolle entlang des Umfanges der Pressrolle im Wesentlichen gleich ist.

12. Verfahren nach einem der Ansprüche 7 bis 11, **dadurch gekennzeichnet, dass** die Rollenplatte (108) mit zumindest drei Montageöffnungen (112, 202, 212) versehen ist, in die Befestigungszapfen (206) eingebracht und sodann im Mantelabschnitt verankert werden.

13. Verfahren nach einem der Ansprüche 7 bis 12, **dadurch gekennzeichnet, dass** jeder Befestigungszapfen (206) mit einem Befestigungsteil (301) versehen ist (406), dass ein Befestigungsloch (204, 214, 216) für jede Montageöffnung (112, 202, 212) im Mantelabschnitt gebohrt wird (404), anschließend an das Bohren der zugehörigen Montageöffnung (112, 202, 212) und dadurch, dass der Befestigungsteil (301) im Befestigungsloch (204, 214, 216) verankert (407) wird.

14. Verfahren nach Anspruch 13, bei dem die Pressrolle mehrere Stützrippen (106), die sich in Längsrichtung des axialen Kernes (102) erstrecken und in im Wesentlichen radialer Richtung verlaufen, aufweist, wobei die Stützrippen (106) um den Umfang des axialen Kerns (102) verteilt sind und der Mantelabschnitt am axialen Kern (102) über die Stützrippen (106) befestigt ist, **dadurch gekennzeichnet, dass** jede Montageöffnung (112, 202, 212) und ihr Befestigungsloch (204, 214, 216) radial mit einer Stützrippe (106) fluchtend angeordnet ist.

15. Verfahren nach einem der Ansprüche 7 bis 14, **dadurch gekennzeichnet, dass** jede Montageöffnung (112, 202, 212) so gebohrt (404) wird, dass ein Schlitz zwischen dem Befestigungszapfen (206) und der inneren Oberfläche seiner Montageöffnung (112, 202, 212) gebildet wird.

## Revendications

1. Rouleau de presse pour laver et/ou déshydrater de la pâte, comprenant une âme axiale (102) et une section de manteau disposée autour de l'âme axiale (102), section de manteau à laquelle au moins une plaque de rouleau perforée (108) est fixée, laquelle plaque de rouleau (108) possède deux côtés courts et deux côtés longs, et la plaque de rouleau (108) s'étend autour de la circonférence entière du rouleau de presse, **caractérisé en ce que** la plaque de rouleau perforée (108) comprend au moins deux ouvertures de montage (112, 202, 212) qui sont réparties entre les deux côtés courts de la plaque de rouleau (108) le long de l'extension longitudinale de la plaque de rouleau (108) et la circonférence entière du rouleau de presse, et **en ce que** le rouleau de presse comprend une broche de fixation (206) pour chaque ouverture de montage (112, 202, 212), laquelle broche de fixation (206) est ancrée dans la section de manteau et entourée par la surface interne de son ouverture de montage (112, 202, 212), moyennant quoi un mouvement de la plaque de rouleau (108) en relation avec la section de manteau dans la direction circonférentielle du rouleau de presse est empêché.

2. Rouleau de presse selon la revendication 1, **caractérisé en ce que** les ouvertures de montage (112, 202, 212) sont distribuées uniformément autour de la circonférence entière du rouleau de presse de sorte que la distance entre deux ouvertures de montage (112, 202, 212), qui sont adjacentes l'une à l'autre dans la direction circonférentielle du rouleau de presse, est sensiblement égale autour de la circonférence entière du rouleau de presse.

3. Rouleau de presse selon la revendication 1 ou 2, **caractérisé en ce qu'**un trou de fixation (204, 214, 216) pour chaque ouverture de montage (112, 202, 212) est disposé dans la section de manteau pour recevoir la broche de fixation (206), et **en ce que** chaque broche de fixation (206) est pourvue d'une portion de fixation (301) ancrée dans ce trou de fixation (204, 214, 216).

4. Rouleau de presse selon la revendication 3, **caractérisé en ce que** le rouleau de presse comprend plusieurs nervures d'appui (106) s'étendant le long de l'extension longitudinale de l'âme axiale (102) et s'étendant dans une direction sensiblement radiale, les nervures d'appui (106) étant réparties autour de la circonférence de l'âme axiale (102), et la section de manteau est fixée à l'âme axiale (102) via les nervures d'appui (106), et **en ce que** chaque ouverture de montage (112, 202, 212) et son trou de fixation (204, 214, 216) sont radialement alignés avec une nervure d'appui (106).

5. Rouleau de presse selon l'une quelconque des revendications 1 à 4, **caractérisé en ce qu'**un écartement est prévu entre la broche de fixation (206) et la surface interne de son ouverture de montage (112, 202, 212).

6. Rouleau de presse pour laver et/ou déshydrater de la pâte, comprenant deux rouleaux de presse, entre lesquels la pâte est passée et pressée dans le pincement de presse entre eux, chaque rouleau de presse comprenant une âme axiale (102) et une section de manteau disposée autour de l'âme axiale (102), section de manteau à laquelle au moins une plaque de rouleau perforée (108) est fixée, **caractérisé en ce qu'**au moins un des rouleaux de presse comprend les caractéristiques qui sont mentionnées dans l'une quelconque des revendications 1 à 5.

7. Procédé de fabrication ou de réparation d'un rouleau de presse permettant de laver et/ou de déshydrater de la pâte, le rouleau de presse comprenant une âme axiale (102) et une section de manteau disposée autour de l'âme axiale (102), section de manteau à laquelle au moins une plaque de rouleau perforée (108) est destinée à être fixée, lequel procédé comprend les étapes suivantes consistant à :
• fixer (402, 403) la au moins une plaque de rouleau (108) à la section de manteau de sorte que ses côtés longs s'étendent autour de la circonférence entière du rouleau de presse ;
• forer (404) au moins deux ouvertures de montage (112, 202, 212) dans la plaque de rouleau (108), qui sont réparties entre les deux côtés courts de la plaque de rouleau (108) le long de l'extension longitudinale de la plaque de rouleau (108) et la circonférence entière du rouleau de presse ;
• insérer (407) une broche de fixation (206) dans chaque ouverture de montage (112, 202, 212) ; et
• ancrer (407) chaque broche de fixation (206) dans la section de manteau de sorte que la broche de fixation (206) est entourée par la surface interne de son ouverture de montage (112, 202, 212), moyennant quoi un mouvement de la plaque de rouleau (108) en relation avec la section de manteau dans la direction circonférentielle du rouleau de presse est empêché.

8. Procédé selon la revendication 7, **caractérisé en ce que** ladite étape consistant à fixer (402, 403) la plaque de rouleau (108) à la section de manteau comprend la contraction de la plaque de rouleau (108), qui est disposée autour de la section de manteau, autour de la section de manteau.

9. Procédé selon la revendication 7 ou 8, **caractérisé en ce que** les ouvertures de montage (112, 202, 212) sont forées (404) de sorte qu'elles sont positionnées centralement entre les côtés longs de la plaque de rouleau (108).

10. Procédé selon la revendication 9, **caractérisé en ce que** les ouvertures de montage (112, 202, 212) sont forées (404) de sorte qu'elles sont positionnées le long de la ligne centrale longitudinale (114) de la plaque de rouleau (108).

11. Procédé selon l'une quelconque des revendications 7 à 10, **caractérisé en ce que** les ouvertures de montage (112, 202, 212) sont distribuées uniformément autour de la circonférence entière du rouleau de presse de sorte que la distance entre deux ouvertures de montage (112, 202, 212), qui sont adjacentes l'une à l'autre dans la direction circonférentielle du rouleau de presse, est sensiblement égale autour de la circonférence entière du rouleau de presse.

12. Procédé selon l'une quelconque des revendications 7 à 11, **caractérisé en ce que** la plaque de rouleau (108) est pourvue d'au moins trois ouvertures de montage (112, 202, 212), dans lesquelles les broches de fixation (206) sont insérées et ensuite ancrées dans la section de manteau.

13. Procédé selon l'une quelconque des revendications 7 à 12, **caractérisé en ce que** chaque broche de fixation (206) est pourvue (406) d'une portion de fixation (301), **en ce qu'**un trou de fixation (204, 214, 216) pour chaque ouverture de montage (112, 202, 212) est foré (404) dans la section de manteau ultérieurement au forage de l'ouverture de montage (112, 202, 212) associée, et **en ce que** la portion de fixation (301) est ancrée (407) dans ce trou de fixation (204, 214, 216).

14. Procédé selon la revendication 13, dans lequel le rouleau de presse comprend plusieurs nervures d'appui (106) s'étendant le long de l'extension longitudinale de l'âme axiale (102) et s'étendant dans une direction sensiblement radiale, les nervures d'appui (106) étant réparties autour de la circonférence de l'âme axiale (102), et la section de manteau est fixée à l'âme axiale (102) via les nervures d'appui (106), **caractérisé en ce que** chaque ouverture de montage (112, 202, 212) et son trou de fixation (204, 214, 216) sont alignés radialement avec une nervure d'appui (106).

15. Procédé selon l'une quelconque des revendications 7 à 14, **caractérisé en ce que** chaque ouverture de montage (112, 202, 212) est forée (404) de sorte qu'un écartement est prévu entre la broche de fixation (206) et la surface interne de son ouverture de montage (112, 202, 212).
